# EUROPÄISCHE PATENTSCHRIFT

(11) **EP 2 981 577 B1**
(45) Veröffentlichungstag und Bekanntmachung des Hinweises auf die Patenterteilung: **14.08.2019**
(21) Anmeldenummer: 14718345.3
(22) Anmeldetag: 01.04.2014
(51) Int. Cl.: C08L 69/00, C08L 83/00

(54) **HOCHTEMPERATURBESTÄNDIGE PHTHALIMID-HALTIGE (CO)POLYCARBONATE MIT VERBESSERTEN RHEOLOGISCHEN EIGENSCHAFTEN**
HIGH-TEMPERATURE (CO)POLYCARBONATES CONTAINING PHTHALIMIDE AND HAVING IMPROVED RHEOLOGICAL PROPERTIES
(CO)POLYCARBONATES CONTENANT UN PHTALIMIDE, RÉSISTANT AUX TEMPÉRATURES ÉLEVÉES ET PRÉSENTANT DES PROPRIÉTÉS RHÉOLOGIQUES AMÉLIORÉES

(30) Priorität: 04.04.2013 EP 13162260
(43) Veröffentlichungstag der Anmeldung: 10.02.2016
(73) Patentinhaber: Covestro Deutschland AG, 51373 Leverkusen (DE)
(72) Erfinder: WEHRMANN, Rolf, 47800 Krefeld (DE); HEUER, Helmut Werner, 51371 Leverkusen (DE); BOUMANS, Anke, 47574 Goch (DE)
(74) Vertreter: Levpat
(86) Internationale Anmeldenummer: PCT/EP2014/056490
(87) Internationale Veröffentlichungsnummer: WO 2014/161830

(56) Entgegenhaltungen:
- EP-A1- 2 730 618
- WO-A1-2008/037364
- WO-A1-2010/108626
- US-B2- 7 253 232

## Beschreibung

Die vorliegende Erfindung betrifft (Co)polycarbonat-Zusammensetzungen und Formmassen, die sich durch verbesserte rheologische Eigenschaften und hohe Wärmeformbeständigkeit auszeichnen.

(Co)polycarbonate gehören zur Gruppe der technischen Thermoplaste. Sie finden vielseitige Anwendungen im Elektro- und Elektronikbereich, als Gehäusewerkstoff von Leuchten und bei Anwendungen, bei denen sowohl besondere thermische und mechanische Eigenschaften als auch hervorragende optische Eigenschaften gefordert sind, beispielsweise Föhne, Anwendungen im Automobilbereich, Kunststoffabdeckungen, Streuscheiben oder Lichtleitelemente sowie Lampenabdeckungen, Reflektoren oder Lampeneinfassungen und Blenden (bezels).

Bei diesen Anwendungen werden praktisch immer die guten thermischen und mechanischen Eigenschaften wie Vicat-Temperatur (Wärmeformbeständigkeit) und Glastemperatur zwingend benötigt. Um eine höhere Wärmeformbeständigkeit zu erzielen, greift man auf spezielle Bisphenole zurück. Dies geht in der Regel mit erhöhten Schmelzviskositäten einher, die sich negativ auf die Verarbeitung, insbesondere im Spritzguss, auswirken.

Es bestand daher die Aufgabe, aromatische (Co)polycarbonate mit verbesserten rheologischen Eigenschaften zu entwickeln, bei weitgehend gleich bleibenden Kemeigenschaften, insbesondere den mechanischen und thermischen Eigenschaften.

Überraschenderweise wurde gefunden, dass eine Zusammensetzung enthaltend (Co)polycarbonat und organomodifizierten Siloxanen (OMS) mit speziellen Strukturen wider Erwarten zu reduzierten Schmelzviskositäten und damit zu verbesserten rheologischen Eigenschaften führt. Diese Maßnahme zur gezielten Erhöhung der Fließfähigkeit, und deren Einstellung und Abhängigkeit vom beigemischten Siloxan, war bisher nicht bekannt. Dieser Effekt war insbesondere deshalb nicht zu erwarten, weil die EP 1095978 lehrt, dass sich bei Zugabe von u. a. eines organomodifizierten Siloxans die Schmelzeviskosität (MFR) erhöht, die Fließfähigkeit also schlechter wird.

### Gegenstand der Erfindung sind Mischungen enthaltend

A) 99,9 bis 92,0 Gew.-Teile, bevorzugt 99,7 bis 94,0 Gew.-Teile (bezogen auf die Summe der Komponenten A + B) hochmolekulares, thermoplastisches, aromatisches (Co)polycarbonat mit einem Molekulargewicht Mw (Gewichtsmittel) von mindestens 10.000 g·mol⁻¹, vorzugsweise von 15.000 g·mol⁻¹ bis 300.000 g·mol⁻¹, das Struktureinheiten einer oder mehrerer der Formeln (Ia), (Ib) und (Ic) enthält, 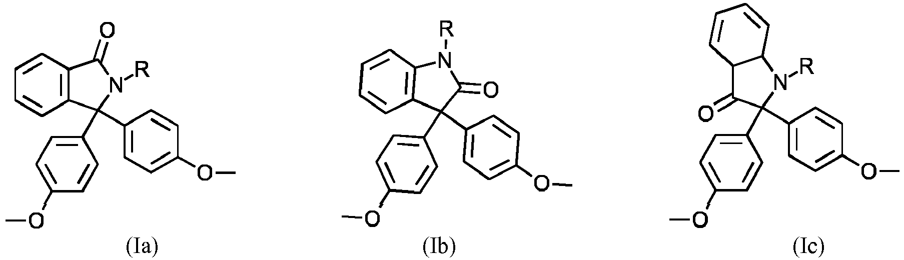 in denen R jeweils für Wasserstoff, C₁-C₄-Alkyl, Aryl oder Aralkyl, bevorzugt für Methyl oder Phenyl steht;
B) 0,1 bis 8,0 Gew.-Teile, bevorzugt 0,3 bis 6,0 Gew.-Teile (bezogen auf die Summe der Komponenten A + B) eines oder mehrerer organisch modifizierten telecheler oder kammartiger Polysiloxane, ausgewählt aus der Gruppe bestehend aus Polysiloxanen der allgemeinen Formeln (IIa) und (IIb) 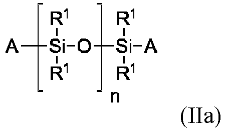 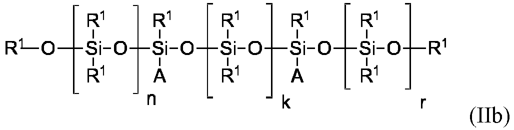 wobei die Reste
   R¹ im Molekül gleich oder verschieden sind und Alkylreste mit 1 bis 4 Kohlenstoffatomen bedeuten,
   A gleich oder verschieden sind und -R²-X bedeuten, wobei
   R² ein Rest der allgemeinen Formel (IIc) 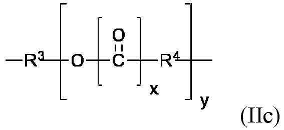 ist,
   R³ ein zweiwertiger, gegebenenfalls substituierter Alkyl- oder Alkenylrest mit 2 bis 11 Kohlenstoffatomen (C₂-C₁₁-Alkyl bzw. C₂-C₁₁-Alkenyl) ist,
   R⁴ untereinander gleich oder verschieden sind und zweiwertige, gegebenenfalls substituierte Alkyl- oder Aralkylreste sind,
   x unabhängig voneinander einen Wert von 0 oder 1,
   y unabhängig voneinander einen Wert von 0 bis 100 hat und
   X eine Aminogruppe ist,
   n, k und r jeweils unabhängig voneinander für eine Zahl zwischen 0 und 200, bevorzugt zwischen 0 und 100 stehen, und wobei n, k und r nicht gleichzeitig 0 sind,
   und gegebenenfalls Additive (Komponente C);
   wobei alle Gewichtsteilangaben in der vorliegenden Anmeldung so normiert sind, dass die Summe der Gewichtsteile der Komponenten A + B in der Zusammensetzung 100 ergeben.

Gegebenenfalls können weitere Additive (Komponente C), wie UV-Absorber, Entformungshilfsmittel oder Thermo-stabilisatoren, in Mengen von jeweils 50 bis 5000 ppm, bezogen auf die Summe der Komponenten A + B, enthalten sein.

Ferner können als Additive anorganische Füllstoffe wie Glasfasern, Carbonfasern oder Pigmente wie beispielsweise Titandioxid, Quarz (Silica) oder Bariumsulfat als Additive enthalten, in Mengen bis zu 35 Gew.-%, bezogen auf die Summe der Komponenten A + B, enthalten sein.

Aus den erfindungsgemäßen (Co)polycarbonaten und (Co)polycarbonat-Zusammensetzungen hergestellte Spritzgussteile oder Extrudate weisen signifikant verbesserte rheologische Eigenschaften bei gleichzeitig nahezu unveränderten mechanischen und thermischen Eigenschaften auf. Dies stellt ein wichtiges Kriterium für die spritzgusstechnische, mechanische und thermische Performance des Materials bzw. des spritzgegossenen bzw. extrudierten Bauteils dar.

**C₁-C₄-Alkyl** steht im Rahmen der Erfindung beispielsweise für Methyl, Ethyl, n-Propyl, isoPropyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₁-Alkyl** darüber hinaus beispielsweise für n-Heptyl und n-Octyl, Pinakyl, Adamantyl, die isomeren Menthyle, n-Nonyl, n-Decyl, n-undecyl; **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

Alkenyl steht im Rahmen der Erfindung für einen geradkettigen, zyklischen oder verzweigten Alkenylrest mit vorzugsweise 2 bis 11 (C₂-C₁₁), bevorzugt mit 2 bis 6 (C₂-C₆) Kohlenstoffatomen. Beispiele für Alkenyl sind Vinyl, Allyl, Isopropenyl und n-But-2-en-1-yl.

Aryl steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Thermoplastische, aromatische (Co)polycarbonate im Sinne der vorliegenden Erfindung sind sowohl Homopolycarbonate als auch Copolycarbonate bestehend aus verschiedenen Diphenolbausteinen, wobei in der vorliegenden Anmeldung unter dem Begriff (Co)polycarbonat auch Homopolycarbonate aus Diphenolbausteinen der Formel (V) subsumiert werden.

Erfindungsgemäß geeignete aromatische (Co)polycarbonate sind literaturbekannt oder nach literaturbekannten Verfahren herstellbar (zur Herstellung aromatischer (Co)polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396).

Die Herstellung aromatischer (Co)polycarbonate erfolgt z. B. durch Umsetzung von Diphenolen mit Kohlensäurehalogeniden, vorzugsweise Phosgen nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Außer den Diphenolderivaten der Formeln IIIa bis IIIc, 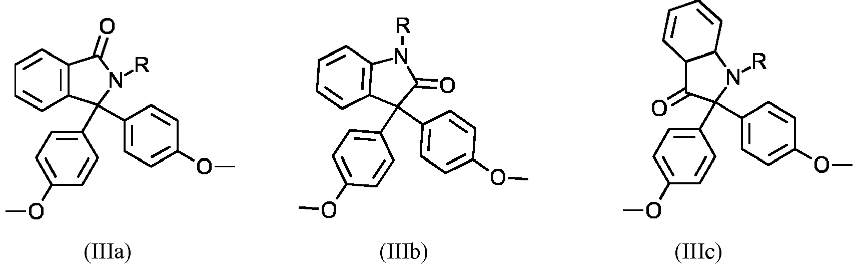 in denen R jeweils für Wasserstoff, C₁-C₄-Alkyl, Aryl oder Aralkyl, bevorzugt für Methyl oder Phenyl steht;
sind für die Herstellung der (Co)polycarbonate geeignete Dihydroxyarylverbindungen solche der Formel (IV) 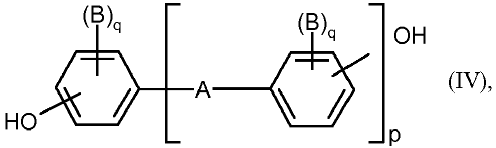 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formeln (V) oder (VI) 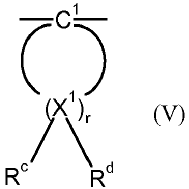 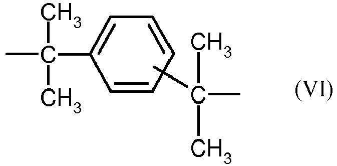
- B: jeweils Wasserstoff, C₁ bis C₁₂-Alkyl, vorzugsweise Methyl, Halogen, vorzugsweise Chlor und/oder Brom
- q: jeweils unabhängig voneinander 0, 1 oder 2,
- p: 1 oder 0 sind, und
- R^{c} und R^{d}: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- r: eine ganze Zahl von 4 bis 7, bevorzugt 4 oder 5 bedeuten, mit der Maßgabe, dass an mindestens einem Atom X¹, R^{c} und R^{d} gleichzeitig Alkyl sind.

Für die Herstellung der erfindungsgemäß zu verwendenden (Co)polycarbonate geeignete Diphenole der Formel (IV) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte weitere Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl-4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxy-phenyl)-2-propyl]-benzol.

Besonders bevorzugte Diphenole sind 2,2-Bis-(4-hydroxyphenyl)-propan (BPA), und 2,2-Bis-(3-methyl-4-hydroxyphenyl)-propan (Dimethyl-BPA).

Besonders bevorzugt sind (Co)polycarbonate aus Bisphenol A und den Bisphenolbausteinen gemäß IIIa bis IIIc, wobei besonders bevorzugt R für Phenyl und Methyl steht.

Es können die Diphenole einzeln oder als beliebige Mischungen eingesetzt werden. Die Diphenole sind literaturbekannt oder nach literaturbekannten Verfahren erhältlich.

Diese und weitere geeignete Diphenole sind kommerziell erhältlich und z.B. in "H. Schnell, Chemistry and Physics of Polycarbonates, Interscience Publishers, New York 1964, S. 28ff; S.102ff', und in "D.G. Legrand, J.T. Bendler, Handbook of Polycarbonate Science and Technology, Marcel Dekker New York 2000, S. 72ff." beschrieben.

Für die Herstellung der thermoplastischen, aromatischen (Co)polycarbonate geeignete Kettenabbrecher sind beispielsweise Phenol, p-tert.-Butylphenol oder Cumylphenol.

Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen (Co)polycarbonate können in bekannter Weise verzweigt sein, und zwar vorzugsweise durch den Einbau von 0,05 bis 2,0 Mol-%, bezogen auf die Summe der eingesetzten Diphenole, an trifunktionellen oder mehr als trifunktionellen Verbindungen, beispielsweise solchen mit drei und mehr phenolischen Gruppen.

Die aromatischen (Co)polycarbonate haben in einer bevorzugten Ausführungsform der Erfindung ein gewichtsgemitteltes Molekulargewicht (M_{w}, gemessen z. B. durch GPC, Ultrazentrifuge oder Streulichtmessung) von mehr als 10 000 gmol⁻¹, besonders bevorzugt 20 000 g·mol⁻¹ bis 300 000 g·mol⁻¹.

Die thermoplastischen, aromatischen (Co)polycarbonate können allein oder im beliebigen Gemisch eingesetzt werden, bevorzugt mit weiteren aromatischen Polycarbonaten.

Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die verwendeten speziellen OMS können verschiedene telechele oder kammartige Siloxane wie beispielsweise Tegomer®-Produkte der Firma Evonik Industries AG, Essen, oder Mischungen daraus sein.

Die erfindungsgemäßen Zusammensetzungen können weitere handelsübliche Polymeradditive wie Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkylsulfonate oder Polyamid-haltige Polymere), sowie Farbstoffe und Pigmente in solchen Mengen enthalten, die die mechanischen Eigenschaften der Zusammensetzung nicht insoweit schädigen, dass das Zieleigenschaftsprofil (kein splitterndes Bruchversagen bei -10°C) nicht mehr erfüllt wird.

Als Flammschutzmittel werden vorzugsweise phosphorhaltige Flammschutzmittel eingesetzt, insbesondere ausgewählt aus den Gruppen der mono- und oligomeren Phosphor- und Phosphonsäureester, Phosphonatamine und Phosphazene, wobei auch Mischungen von mehreren Komponenten ausgewählt aus einer oder verschiedener dieser Gruppen als Flammschutzmittel zum Einsatz kommen können. Auch andere hier nicht speziell erwähnte, vorzugsweise halogenfreie Phosphorverbindungen können alleine oder in beliebiger Kombination mit anderen, vorzugsweise halogenfreien Phosphorverbindungen eingesetzt werden. Beispielsweise sind als Phosphorverbindungen geeignet: Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcinverbrücktes Di- bzw. Oligophosphat und Bisphenol A verbrücktes Di- bzw. Oligophosphat. Der Einsatz von oligomeren Phosphorsäureestern, die sich vom Bisphenol A ableiten, ist insbesondere bevorzugt. Als Flammschutzmittel geeignete Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, also als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001" oder in WO 99/55772, S. 15-25.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Tris-iso-octylphosphat, Octadecyl-3-(3,5-di-tertbutyl-4-hydroxyphenyl)propionat (Irganox 1076), Bis(2,4-dicumylphenyl)-pentaerythritoldiphosphit (Doverphos S-9228-PC), Bis(2,6-di-tert-butyl-4-methylphenyl)pentaerythritoldiphosphit (ADK STAB PEP-36) oder Triphenylphosphin. Sie werden allein oder im Gemisch (z. B. Irganox B900 oder Doverphos S-9228-PC mit Irganox B900 bzw. Irganox 1076) eingesetzt.

Als Entformungsmitttel eignen sich bevorzugt Pentaerythrittetrastearat, Glycerinmonostearat, Stearylstearat oder Propoandiolmono- bzw. distearat. Sie werden allein oder im Gemisch eingesetzt.

Als UV-Stabilisatoren eignen sich bevorzugt 2-(2'-Hydroxyphenyl)benzotriazole, 2-Hydroxybenzophenone, Ester von substituierten und unsubstituierten Benzoesäuren, Acrylate, sterisch gehinderte Amine, Oxamide, 2-(2-Hydroxyphenyl)-1,3,5-triazine, besonders bevorzugt sind substituierte Benztriazole wie beispielsweise Tinuvin 360, Tinuvin 234, Tinuvin 329 oder Tinuvin 1600 bzw. Tinuvin 312 (Produkte der BASF SE, Ludwigshafen).

Des weiteren können Farbmittel, wie organische Farbstoffe oder Pigmente oder anorganische Pigmente, IR-Absorber, einzeln, im Gemisch oder auch in Kombination mit Stabilisatoren, Glas(hohl)kugeln, anorganischen Füllstoffen oder organische oder anorganische Streupigmente zugesetzt werden.

Die erfindungsgemäßen thermoplastischen Formmassen werden hergestellt, indem man die jeweiligen Bestandteile in bekannter Weise vermischt und bei Temperaturen von 200°C bis 380°C, bevorzugt bei 240 bis 360°C, besonders bevorzugt bei 250 bis 350 °C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist ferner die Verwendung von OMS enthaltend wenigstens eine Struktureinheit der allgemeinen Formeln (IIa) oder (IIb) in einem Verfahren zur Herstellung von (Co)polycarbonaten enthaltend mindestens einen Diphenolbaustein der Formeln (IIIa), (IIIb) und (IIIc) 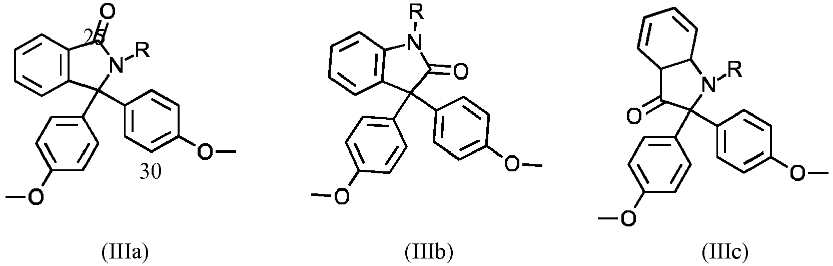 in denen R jeweils für Wasserstoff, C₁-C₄-Alkyl, Aryl oder Aralkyl, bevorzugt für Methyl oder Phenyl steht;
wobei das/die Polysiloxane(e) dem (Co)polycarbonat beigemengt wird.

Gegenstand der Erfindung sind ebenfalls Verfahren zur Herstellung der Formmassen durch Compoundierung, Kneten oder in einem Lösungsprozess und anschließendem Abtrennen des Lösungsmittels sowie die Verwendung der Formmassen zur Herstellung von Formkörpern.

Die erfindungsgemäßen Formmassen können zur Herstellung von Formkörpern jeder Art verwendet werden. Diese können zum Beispiel durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Die erfindungsgemäßen (Co)polycarbonate und (Co)polycarbonat-Zusammensetzungen können auf üblichen Maschinen, beispielsweise auf Extrudern oder Spritzgussmaschinen, zu beliebigen Formkörpern bzw. Formteilen, zu Folien und Folienlaminate oder Platten oder Flaschen, in üblicher Weise verarbeitet werden.

Die so erhältlichen (Co)polycarbonate können zur Herstellung von Extrudaten (Platten, Folien und deren Laminate; z. B. für Kartenanwendungen und Rohre) und Formkörpern wie z.B. Platten, Stegplatten, , Streu- oder Abdeckscheiben, Lampenabdeckungen, bezels, Reflektoren usw. eingesetzt werden. Weiterhin können sie zur Herstellung von Gegenständen für den E/E und IT-Bereich wie z. B. Gehäusen, Steckern, Leisten, usw. verwendet werden.

Die (Co)polycarbonat-Zusammensetzungen werden insbesondere zur Herstellung von Compounds, Blends und Bauteilen verwendet, bei denen thermische und mechanische Eigenschaften verbunden mit guten Fließfähigkeiten, d. h. reduzierten Schmelzviskositäten genutzt werden, wie beispielsweise Gehäuse, Gegenstände im E/E-Bereich, wie Stecker, Schalter, Platten, Lampenhalterungen, Lampenabdeckungen, Automobilbereich wie Lampenfassungen und -abdeckungen und andere Anwendungen.

Die Extrudate und Formkörper bzw. Formteile aus den erfindungsgemäßen Polymeren sind ebenfalls Gegenstand der vorliegenden Anmeldung.

Weitere mögliche Anwendungen der erfindungsgemäßen (Co)polycarbonatformmassen sind: als transluzente Kunststoffe mit einem Gehalt an Glasfasern für lichttechnische Zwecke (siehe beispielsweise DE-A 1 554 020), zur Herstellung von Präzisionsspritzgussteilchen, wie beispielsweise Linsenhalterungen. Hierzu verwendet man (Co)polycarbonate mit einem Gehalt an Glasfasern, die gegebenenfalls zusätzlich etwa 1 bis 10 Gew.-% MoS₂, bezogen auf Gesamtgewicht, enthalten.

Die folgenden Beispiele dienen der weiteren Erläuterung der Erfindung und sind nicht als Einschränkung zu sehen.

### Beispiele

Folgende Rohstoffe wurden für die Herstellung der Compounds verwendet:
- PC-1: Lexan XHT2141; high heat Copolycarbonat von Sabic Innovative Plastics mit einem MVR von 40 cm³/10 min (330 °C, 2,16 kg)
- Tegomer® A-Si 2322: alpha, omega-aminoterminiertes Siloxan der Evonik Industries AG, Essen.

Mittels eines Mehrwellenextruders werden verschiedene Testmischungen des aminoterminierten Siloxans Tegomer® A-Si 2322 mit dem Basis-Copolycarbonat PC-1 bei einer Temperatur von 330°C hergestellt.

Die rheologischen Eigenschaften der Blends werden zur Kontrolle mit PC-1 ohne Additive verglichen. Die Zusammenfassung der Eigenschaften ist in der folgenden Tabelle 2 dem Vergleichsbeispiel (Probe ohne Additive) gegenübergestellt.

Die Bestimmung des Schmelze-Volumenfließrate (MVR) erfolgte nach ISO 1133 (bei einer Prüftemperatur von 300 °C, Masse 1,2 kg) mit dem Gerät Göttfert MI-ROBO 8998 der Firma Göttfert oder dem Gerät Zwick 4106 der Firma Zwick Roell.

**Tabelle 1**

| **Rezeptur:** | | **-1** | **-2** | **-3** |
|---|---|---|---|---|
| Lexan XHT2141 | % | 100 | 98,5 | 97 |
| Tegomer A-Si 2322 | % | - | 1,5 | 3 |

**Tabelle 2**

| **Prüfungen:** | | **-1** | **-2** | **-3** |
|---|---|---|---|---|
| MVR 330°C/2,16kg | cm³/10min | 40,0 | 62,7 | 69,8 |
| IMVR20' 330°C/2,16kg | cm³/10min | 40,5 | 63,7 | 73,7 |

Man erkennt deutlich, dass der MVR durch die Zugabe des Siloxans signifikant erhöht ist, d. h. die Schmelzviskosität ist reduziert und die Fließfähigkeit dadurch erhöht.

**Tabelle 3**

| **Schmelzevisk. 300°C** | | | | |
|---|---|---|---|---|
| eta 50 | Pas | 536 | 353 | 300 |
| eta 100 | Pas | 525 | 343 | 294 |
| eta 200 | Pas | 504 | 320 | 274 |
| eta 500 | Pas | 440 | 249 | 225 |
| eta 1000 | Pas | 353 | 191 | 175 |
| eta 1500 | Pas | 295 | 164 | 150 |
| eta 5000 | Pas | 143 | 100 | 98 |

| **Schmelzevisk. 320°C** | | | | |
|---|---|---|---|---|
| eta 50 | Pas | 287 | 175 | 147 |
| eta 100 | Pas | 281 | 171 | 145 |
| eta 200 | Pas | 275 | 164 | 134 |
| eta 500 | Pas | 253 | 146 | 120 |
| eta 1000 | Pas | 219 | 122 | 107 |
| eta 1500 | Pas | 194 | 107 | 97 |
| eta 5000 | Pas | 108 | 62 | 49 |

| **Schmelzevisk. 330°C** | | | | |
|---|---|---|---|---|
| eta 50 | Pas | 178 | 121 | 106 |
| eta 100 | Pas | 168 | 117 | 104 |
| eta 200 | Pas | 166 | 114 | 101 |
| eta 500 | Pas | 154 | 108 | 96 |
| eta 1000 | Pas | 146 | 93 | 82 |
| eta 1500 | Pas | 135 | 84 | 72 |
| eta 5000 | Pas | 88 | 47 | 39 |

| **Schmelzevisk. 340°C** | | | | |
|---|---|---|---|---|
| eta 50 | Pas | 148 | 90 | 79 |
| eta 100 | Pas | 143 | 87 | 76 |
| eta 200 | Pas | 141 | 85 | 75 |
| eta 500 | Pas | 133 | 83 | 71 |
| eta 1000 | Pas | 124 | 73 | 63 |
| eta 1500 | Pas | 117 | 67 | 58 |
| eta 5000 | Pas | 77 | 34 | 31 |

| **Schmelzevisk. 360°C** | | | | |
|---|---|---|---|---|
| eta 50 | Pas | 81 | 51 | 42 |
| eta 100 | Pas | 80 | 48 | 42 |
| eta 200 | Pas | 79 | 47 | 40 |
| eta 500 | Pas | 78 | 46 | 39 |
| eta 1000 | Pas | 75 | 45 | 38 |
| eta 1500 | Pas | 74 | 43 | 38 |
| eta 5000 | Pas | 57 | 29 | 25 |

| | | | | |
|---|---|---|---|---|
| eta: Scherraten mit der Einheit [s⁻¹]. | | | | |

Man erkennt, dass bei allen Temperaturen die Fließkurven deutlich geringere Viskositäten anzeigen, das heißt, dass die erfindungsgemäßen Zusammensetzungen besser fließen als das eingesetzte Basisharz Lexan XHT 2141. Das verbesserte Fließverhalten wird über den gesamten Scherbereich und bei verschiedenen Temperaturen erhalten.

## Patentansprüche

1. Zusammensetzung enthaltend
A) 99,9 bis 92 Gew.-Teile (bezogen auf die Summe der Komponenten A + B) hochmolekulares, thermoplastisches, aromatisches (Co)polycarbonat mit einem Molekulargewicht Mw (Gewichtsmittel) von mindestens 10.000 g·mol⁻¹ das Struktureinheiten einer oder mehrerer der Formel(n) (Ia), (Ib) und (Ic) enthält, 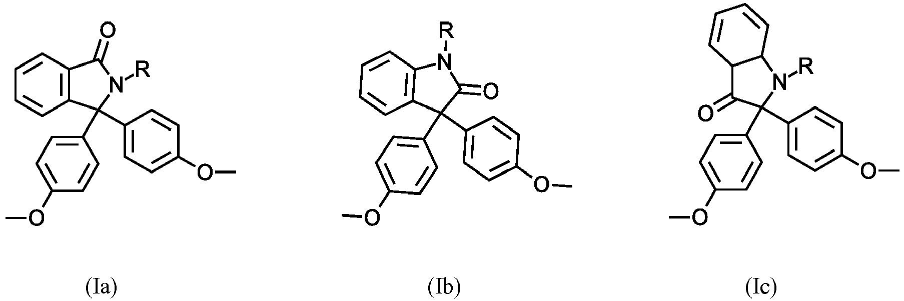 in denen R jeweils für Wasserstoff, C₁-C₄-Alkyl, Aryl oder Aralkyl, bevorzugt für Methyl oder Phenyl steht;
B) 0,1 bis 8 Gew.-Teile (bezogen auf die Summe der Komponenten A + B) eines oder mehrerer organisch modifizierten telecheler oder kammartiger Polysiloxane, ausgewählt aus der Gruppe bestehend aus Polysiloxanen der allgemeinen Formeln (IIa) und (IIb) 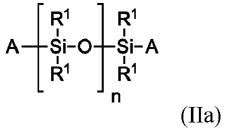 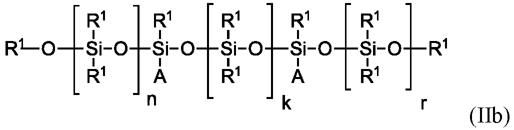 wobei die Reste
R¹ im Molekül gleich oder verschieden sind und Alkylreste mit 1 bis 4 Kohlenstoffatomen bedeuten,
A gleich oder verschieden sind und -R₂-X bedeuten, wobei
R² ein Rest der allgemeinen Formel (IIc) 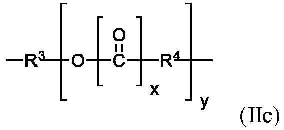 ist,
R³ ein zweiwertiger, gegebenenfalls substituierter Alkyl- oder Alkenylrest mit 2 bis 11 Kohlenstoffatomen ist,
R⁴ untereinander gleich oder verschieden sind und zweiwertige, gegebenenfalls substituierte Alkyl- oder Aralkylreste sind,
x unabhängig voneinander einen Wert von 0 oder 1,
y unabhängig voneinander einen Wert von 0 bis 100 hat und
X eine Aminogruppe ist,
n, k und r jeweils unabhängig voneinander für eine Zahl zwischen 0 und 200 stehen und wobei n, k und r nicht gleichzeitig 0 sind
und
(C) gegebenenfalls Additive.

2. Zusammensetzung gemäß Anspruch 1, **dadurch gekennzeichnet, dass** das (Co)polycarbonat A) ein Molekulargewicht Mw (Gewichtsmittel) von 15.000 g·mol⁻¹ bis 300.000 g·mol⁻¹ hat.

3. Zusammensetzung gemäß Anspruch 1 oder 2, **dadurch gekennzeichnet, dass** die Komponente A) in Mengen von 99,7 bis 94 Gew.-Teile und Komponente B) in Mengen von 0,3 bis 6 Gew.-Teile (bezogen auf die Summe der Komponenten A + B) verwendet wird.

4. Zusammensetzung gemäß einem der voranstehenden Ansprüche, **dadurch gekennzeichnet, dass** Additive wie UV-Absorber, Entformungshilfsmittel oder Thermostabilisatoren in den Mengen von jeweils 50 bis 5000 Gew.-ppm bezogen auf die Summe der Komponenten A + B enthalten sind.

5. Zusammensetzung gemäß einem der voranstehenden Ansprüche enthaltend als Struktureinheiten der Formel (Ia) und/oder (Ib) wenigstens eine der folgenden Strukturen

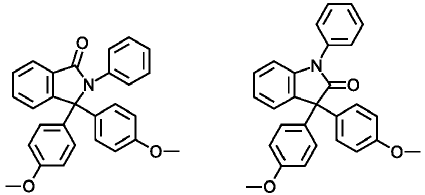

6. Verfahren zur Herstellung der Zusammensetzung gemäß einem der Ansprüche 1 bis 5, in dem die Bestandteile vermischt und bei erhöhter Temperatur schmelzcompoundiert bzw. schmelzextrudiert werden.

7. Verwendung von Zusammensetzungen gemäß einem der Ansprüche 1 bis 5 zur Herstellung von Formteilen.

8. Formteile erhältlich aus Zusammensetzungen gemäß einem der Ansprüche 1 bis 5.

9. Verwendung von Zusammensetzungen gemäß einem der Ansprüche 1 bis 5 zur Herstellung von Blends.

## Claims

1. Composition comprising
A) from 99.9 to 92 parts by weight (based on the sum of components A + B) of high molecular weight, thermoplastic, aromatic (co)polycarbonate having a molecular weight Mw (weight average) of at least 10 000 g·mol⁻¹ and comprising structural units of one or more of formula(e) (Ia), (Ib) and (Ic), 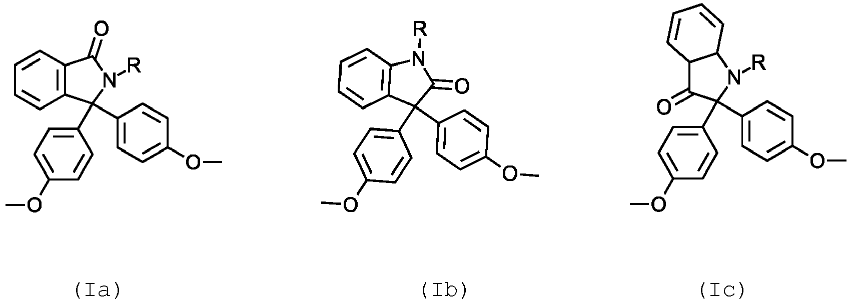 where R in each case represents hydrogen, C₁-C₄ alkyl, aryl or aralkyl, preferably methyl or phenyl;
B) from 0.1 to 8 parts by weight (based on the sum of components A + B) of one or more organically modified telechelic or comb polysiloxanes selected from the group consisting of polysiloxanes of general formulae (IIa) and (IIb) 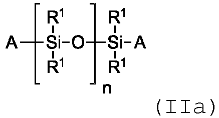 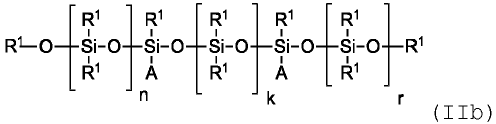 where the radicals
R¹ in a molecule are identical or different and represent alkyl radicals comprising from 1 to 4 carbon atoms,
A are identical or different and represent - R₂-X, where
R² is a radical having the general formula (IIC) 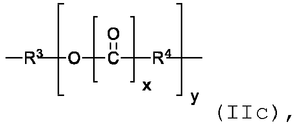
R³ is a divalent, optionally substituted alkyl or alkenyl radical comprising from 2 to 11 carbon atoms,
R⁴ are identical or different at each occurrence and are divalent, optionally substituted alkyl or aralkyl radicals,
x independently of one another has a value of 0 or 1,
y independently of one another has a value of from 0 to 100 and
X is an amino group,
n, k and r each independently of one another represent a number between 0 and 200, subject to the proviso that n, k and r are not all 0,
and
C) optionally additives.

2. Composition according to Claim 1, **characterized in that** the (co)polycarbonate A) has a molecular weight Mw (weight average) of from 15 000 g·mol⁻¹ to 300 000 g·mol⁻¹.

3. Composition according to either of Claims 1 and 2, **characterized in that** component A) is employed in amounts of from 99.7 to 94 parts by weight and component B) is employed in amounts of from 0.3 to 6 parts by weight (based on the sum of components A + B).

4. Composition according to any preceding claim, **characterized in that** said composition comprises additives, such as UV absorbers, demolding auxiliaries or heat stabilizers, in amounts of from 50 to 5000 ppm by weight in each case, based on the sum of components A + B.

5. Composition according to any preceding claim comprising at least one of the following structures as structural units of formula (Ia) and/or (Ib)

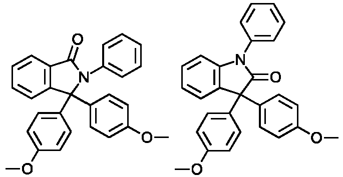

6. Process for producing the composition according to any of Claims 1 to 5 comprising mixing the constituents and melt compounding and melt extruding the resulting mixture at elevated temperature.

7. Use of compositions according to any of Claims 1 to 5 for producing molded parts.

8. Molded parts obtainable from compositions according to any of Claims 1 to 5.

9. Use of compositions according to any of Claims 1 to 5 for producing blends.

## Revendications

1. Composition contenant :
A) 99,9 à 92 parties en poids (par rapport à la somme des composants A+B) d'un (co)polycarbonate aromatique thermoplastique de poids moléculaire élevé, ayant un poids moléculaire Mw (moyenne en poids) d'au moins 10 000 g·mol⁻¹, qui contient des unités structurales d'une ou de plusieurs des formules (Ia), (Ib) et (Ic) : 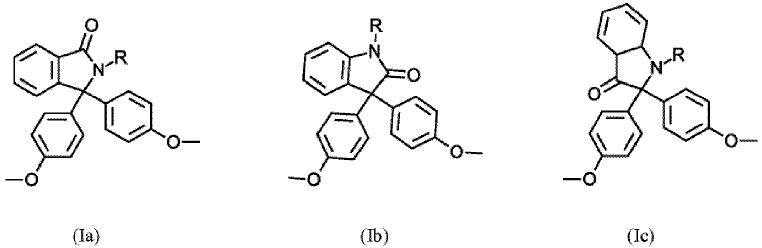 dans lesquelles R représente à chaque fois hydrogène, alkyle en C₁-C₄, aryle ou aralkyle, de préférence méthyle ou phényle ;
B) 0,1 à 8 parties en poids (par rapport à la somme des composants A+B) d'un ou de plusieurs polysiloxanes téléchéliques ou en peigne modifiés organiquement, choisis dans le groupe constitué par les polysilocanes des formules générales (IIa) et (IIb) : 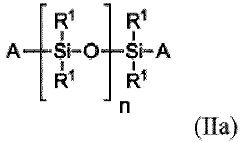 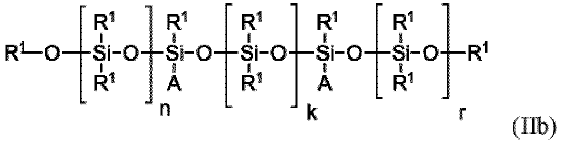 dans lesquelles les radicaux
R¹ dans la molécule sont identiques ou différents, et signifient des radicaux alkyle de 1 à 4 atomes de carbone,
A sont identiques ou différents, et signifient -R₂-X,
R² étant un radical de la formule générale (IIc) : 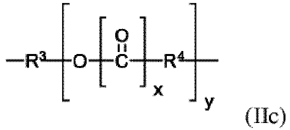
R³ étant un radical alkyle ou alcényle bivalent, éventuellement substitué, de 2 à 11 atomes de carbone,
les R⁴ étant identiques ou différents les uns des autres, et étant des radicaux alkyle ou aralkyle bivalents, éventuellement substitués,
les x représentant indépendamment les uns des autres une valeur de 0 ou 1,
les y représentant indépendamment les uns des autres une valeur de 0 à 100, et
X étant un groupe amino,
n, k et r représentant chacun indépendamment les uns des autres un nombre compris entre 0 et 200, et n, k et n ne représentant pas simultanément 0,
et
(C) éventuellement des additifs.

2. Composition selon la revendication 1, **caractérisée en ce que** le (co)polycarbonate A) a un poids moléculaire Mw (moyenne en poids) de 15 000 g·mol⁻¹ à 300 000 g·mol⁻¹.

3. Composition selon la revendication 1 ou 2, **caractérisée en ce que** le composant A) est utilisé en quantités de 99,7 à 94 parties en poids et le composant B) en quantités de 0,3 à 6 parties en poids (par rapport à la somme des composants A+B).

4. Composition selon l'une quelconque des revendications précédentes, **caractérisée en ce que** des additifs tels que des absorbeurs UV, des adjuvants de démoulage ou des stabilisateurs thermiques sont contenus en des quantités respectives de 50 à 5 000 ppm en poids, par rapport à la somme des composants A+B.

5. Composition selon l'une quelconque des revendications précédentes, contenant en tant qu'unités structurales de formule (Ia) et/ou (Ib) au moins une des structures suivantes :

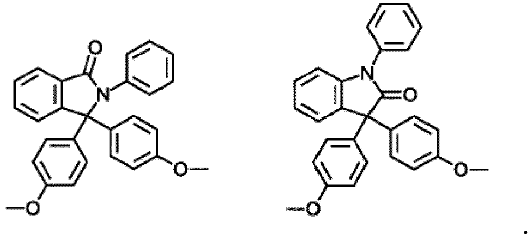

6. Procédé de fabrication de la composition selon l'une quelconque des revendications 1 à 5, selon lequel les constituants sont mélangés, et malaxés à l'état fondu ou extrudés à l'état fondu à température élevée.

7. Utilisation de compositions selon l'une quelconque des revendications 1 à 5 pour la fabrication de pièces moulées.

8. Pièces moulées pouvant être obtenues à partir de compositions selon l'une quelconque des revendications 1 à 5.

9. Utilisation de compositions selon l'une quelconque des revendications 1 à 5 pour la fabrication de mélanges.
